(19) Europäisches Patentamt

European Patent Office

Office européen des brevets

(11) **EP 0 683 605 B1**

(12) **EUROPEAN PATENT SPECIFICATION**

(45) Date of publication and mention
of the grant of the patent:
**29.11.2000 Bulletin 2000/48**

(51) Int. Cl.⁷: $H04N\ 5/208$, $H04N\ 5/14$

(21) Application number: **95107197.6**

(22) Date of filing: **12.05.1995**

(54) **Method and device for enhancing the transients of a video signal in component form**

Verfahren und Vorrichtung zum verbessern der Übergänge von Videosignalkomponenten

Procédé et dispositif pour améliorer les transitions des composantes d'un signal vidéo

(84) Designated Contracting States:
**DE FR GB IT**

(30) Priority: **18.05.1994 FI 942308**

(43) Date of publication of application:
**22.11.1995 Bulletin 1995/47**

(73) Proprietor:
**NOKIA TECHNOLOGY GmbH**
**75175 Pforzheim (DE)**

(72) Inventors:
• **Yrjänäinen, Jukka**
 **SF-33580 Tampere (FI)**
• **Öistämö, Kai**
 **SK-02320 Espoo (FI)**

(74) Representative:
**Stendel, Klaus et al**
**Nokia GmbH,**
**Patentabteilung,**
**Postfach 101823**
**44718 Bochum (DE)**

(56) References cited:
**FR-A- 2 563 069**        **US-A- 4 334 244**
**US-A- 4 809 070**        **US-A- 5 262 978**

• **PATENT ABSTRACTS OF JAPAN vol. 013, no. 368 (P-919), 16 August 1989 & JP-A-01 125681 (RICOH CO LTD), 18 May 1989,**
• **PERNULL H ET AL: "A DIGITAL DISPLAY PROCESSOR WITH INTEGRATED 9 BIT TRIPLE DAC FOR ENHANCED TV APPLICATIONS" 1 August 1993 , IEEE TRANSACTIONS ON CONSUMER ELECTRONICS, VOL. 39, NR. 3, PAGE(S) 247 - 254 XP000396287 * the whole document ***

## Description

The invention relates to a method and a device for modifying the sharpness of the transients of video signals in component form, and to a checking block of the structure of the transients of video signals.

Human eye is sensitive to the edges of objects of an image. A modification, i.e., a transient is visible in these areas in the components of video signals, the sharpness of the transient having an effect on how sharply the image is perceived. Consequently, the sharpness of the transient is a significant factor which influences the image quality. Current image accentuation methods generally work on luminance components only. The most common method known is a peaking, in which a high-frequency component, that has been filtered from the image signal using a linear highpass filter, is added to the image signal. However, a basic problem with these methods is that while the signal transitions become sharper, the strengthened high-frequency signal component at the same time generates, in the start and stop points of the transitions, areas where the signal strength is either above or below the original level. The phenomenon (ringing) is visible as disturbing dark and bright flames which surround the edges of the objects in the image. When applied to color components, the method produces extremely disturbing errors because it creates colors which do not exist in the original image in that particular area.

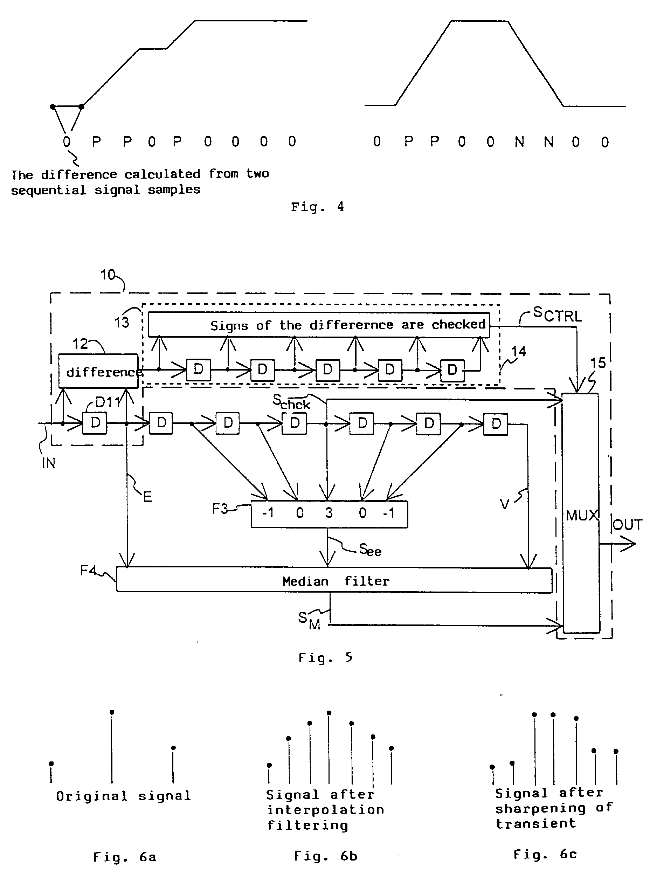

Methods have been developed for accentuating chrominance, i.e., color difference signals, which methods are based on identifying the start, stop, and mid points of the transitions, using the approximation of the first and second derivatives of the signal. After identifying the transition the signal is sharpened by replacing the signal of the transition area with samples taken after a suitable delay (before and after the mid point of the transition). This method is used in DCTI circuit of Display Processor SDA9280 of Siemens, e.g. A problem of the method is its complexity, and the fact that in order to operate effectively the delays should be sufficiently long. Long delays, in turn, cause error function when a signal component randomly enters the window of a filter, containing several divergent transitions, as shown in Fig. 4b.

Another solution for adaptive image enhancing is described in US 4,334,244. This US patent describes an image enhancement system where noise is attenuated in smooth regions of an image and strong image details like edges are amplified. The performance of this type of processing is very similar to so called 'peaking' techniques where image edges are emphasized by adding amplified high frequency components to the original image. The added value of that patent is that noise amplification is prevented in smooth image areas. However, the performance of the edge sharpening part of this patent is very similar compared to the other state of the art. As an example the mentioned patent describes the edge enhancement processor in a preferred embodiment (column 5, lines 37 - 55) which forms the enhanced output signal $P(i, j)$ by adding to the averaged signal $f(i, j)$ the gradient signal $G(i, j)$ multiplied with a term that depends on an absolute value of a gradient and a measured noise level. The resulting image is very similar to that obtained with other peaking type image enhancement methods.

The arrangement described in US 4,334,244 has several drawbacks: peaking type methods create under- and overshoot near the starting and ending point of the image transients. This phenomenon is seen as disturbing 'ringing' around the image object and it makes the picture look unnatural. Furthermore, this type of method is not usable when processing color components since the gradients of different components might have totally different values around the edges of the objects resulting in the fact that different color components are amplified differently. This is perceived as changed color value (i.e. hue and saturation) around the objects in image. This phenomenon is totally unacceptable with natural images and thus it restricts the 'peaking' type methods to be used only for the luminance component.

The purpose of the present invention is to provide a method and a device which can be used to sharpen the transients of the video signal, not only of the luminance component but also of the chrominance components and at the same avoid under-and overshoot and to thus enhance the sharpness effect of the image. The video signal is preferably a signal in the form of sampled data.

In the method according to the invention the transient is enhanced by using a filter structure consisting of at least two different stages. The filters of the first stage are used to provide different estimates of the transient to be sharpened and the last filter stage chooses one of the results of the first stage for the entire output of the filter system in a way that transient area is sharpened but the local maximum or minimum value of the signal is not exceeded too much. This arrangement prevents totally unwanted under- and overshoot. One further advantage of the method according to the invention is its applicability to accentuate not only luminance components but also color components.

The method according to the invention is characterized in that the video signal is filtered by at least two different filtering stages, wherein the first filtering stage processes the video signal frequency, phase or structure or a combination thereof, providing different processed signals, and the last filtering stage chooses an output signal from at least two signals of the filtering stage, obtained as an input and processed in one of the previous filtering stages.

The device according to the invention is characterized in that it comprises at least two different filtering stages, the first filtering stage comprising a filter for processing the frequency, phase or structure of the video signal or a combination thereof, providing different processed signals as outputs, and the last filtering stage comprises a selective filter for selecting the output signal of the device from at least two of the signals of the filtering stage obtained as inputs and processed in one of the previous filtering stages.

The checking block of the transient structure of video signals according to the invention is characterized in that it comprises a difference-forming block for calculating the difference between two pixels processed in sequence, and a checking block for the sign of differences for checking the signs of differences calculated from a number of pixels processed in sequence.

The filter structure according to the invention comprises at least two different filtering stages. The filters of the first filtering stage can be linear (e.g., a highpass filter) or nonlinear (e.g., a volterra filter, median filter, morphologic filter) or other kinds of filters with process the frequency, phase or structure of signals. The last filtering stage is any filter which can be used to select one of its inputs as a output. The grounds for selection used determine the type of filter. Generally, the filter can be a so-called WOS-filter (Weighted Order Statistic), e.g., a median filter which is used to select for the output one of the results of the first filtering stages. The selection is typically made so that the typical problems of linear filters, such as the ringing phenomenon, are avoided. The method according to the invention can be used for luminance (Y) and colour difference components (U, V) as well as for colour components (red, green, blue: R, G, B), for instance.

All the filters used in the method can also be adaptive, being adapted with respect to the noise level or tone value of the signal, e.g. The filters used can also be motion or edge adaptive, whereby they are controlled using a motion detector and/or edge detector. The entire operation of the filtering system can also be controlled by different algorithms analyzing the signal. The filters of the method can operate in one-, two-, or three-dimensional windows. The samples of a video signal (video image) which the filter takes from the signal are in the window. Information in the vertical, horizontal of time direction of the video image can thus be utilized in the filtering. In a one-dimensional window, the samples are taken only in a vertical or horizontal level, in a two-dimensional window the samples are taken at different points in a vertical or horizontal level, and in a three-dimensional window the samples are taken at different points in the vertical and horizontal level and from different images with respect to time. The three-dimensional filter structure can be implemented so that it detects whether a moving or stationary image field is in question. Accentuation of the image is more important in a stationary image than in a moving image, because in a moving image the eye does not have time to notice inaccuracies, but in a stationary image the eye perceives inaccurate edges very easily.

The invention is described in the following with reference to the appended drawings in which:

Fig. 1 presents a block diagram of the basic solution of the sharpening method of transients according to the invention,
Fig. 2a presents a more detailed block diagram of the filter according to the invention which performs the sharpening method of transients,
Fig. 2b presents another implementation of the filter according to the invention which performs the sharpening method of transients,
Fig. 3a presents the operation of the device according to Fig. 2a,
Fig. 3b presents the principle of the output signal provided by the device according to Fig. 2a which performs the sharpening of transients,
Fig. 3c presents the operation of the device according to Fig. 2b,
Fig. 3d presents the principle of the output signal provided by the device according to Fig. 2b which performs the sharpening of transients,
Fig. 4a presents a part of a video signal containing parallel transients,
Fig. 4b presents a part of a video signal containing divergent transients,
Fig. 5 presents a detailed block diagram of the filter according to the invention, taking into consideration the structure of transients,
Fig. 6a presents an example of an original signal in the form of sampled data,
Fig. 6b presents an example of a signal after interpolation filtering, which has increased the sampling rate,
Fig. 6c presents an example of a signal, whose sampling rate has been increased, after the sharpening of the transient,
Fig. 7 presents a detailed block diagram of the filter according to the invention which sharpens the transient and also increases the sampling rate.

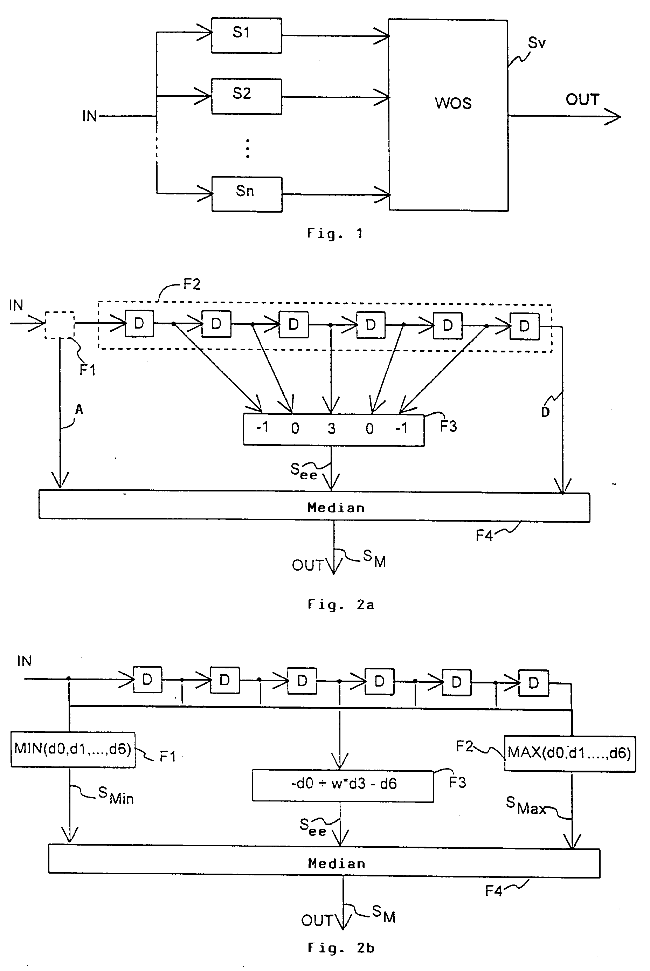

A simplified block diagram of the filter performing the method according to the invention is presented in Fig. 1. Filters S1-Sn of the first filtering stage can be linear (e.g., highpass filters) or nonlinear (e.g., volterra filters, media filters, morphologic filters) or other types of filters which process the frequency, phase or structure of signals. The last filtering stage Sv is any filter which can be used to select one of its inputs as the output. The grounds used for selection determine the type of filter. Generally, the filter can be a WOS filter (Weighted Order Statistic), e.g., a median filter, which is used to select for the output one of the results of the first filtering stages. The selection is typically made so that typical problems of linear filters, such as the ringing phenomenon, are avoided. The median filter selects for the output an input which comprises the midmost value. Other examplary filters can be, for instance, a maximum filter which selects the highest value of its inputs for the output, a minimum filter which selects the lowest value of its inputs for the output, or another rank-order filter (the second highest sample, the third highest sample, etc., is selected, for instance). The selection of the filter type for the last filtering stage depends on the properties of the first filtering stages.

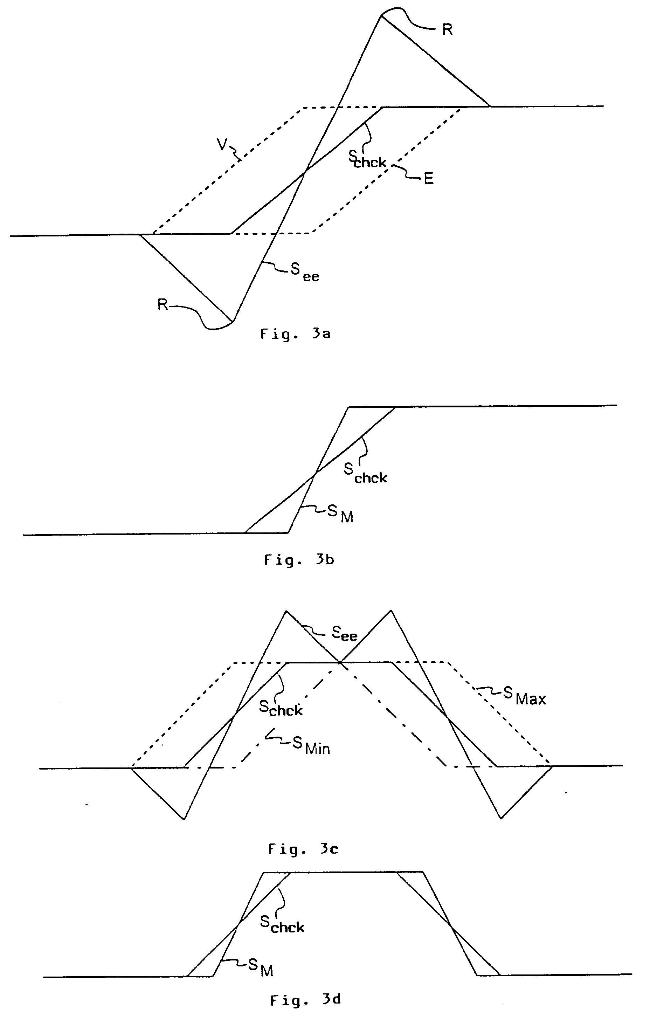

Fig. 2a presents a more detailed block diagram of the filter according to the invention. The filter comprises three linear filters F1, F2, F3 as the first filtering stages, and a three-point median filter F4 as the second stage. Of the linear filters, F3 is a peaking-type edge emphasis filter and the other two F1 and F2 provide, as the output, a signal which is delayed D and advanced A with respect to the input of the edge emphasis filter. In the Figure, the first linear filter F1 directly provides a advanced signal, and the second linear filter comprises a number of delay elements D for delaying the signal. The duration of one delay element D can be one pixel, whereby the delay is effected in the horizontal direction in the Figure, i.e., sequential image samples are taken to the filtering from the same line, or the duration can be equal to the length of one video line, whereby the delay is effected in the vertical direction in the Figure, i.e., overlapping image samples are taken to the filtering. Median filter F4 picks the middle tone value, i.e., the median of the tone values, from these outputs of preliminary filters F1, F2 and F3. The operation of the filter according to Fig. 2a and its input and output signals are presented in Figs. 3a and 3b. The curves in the horizontal direction of Figs. 3a and 3b present the signal's pixels which can be selected in a one-, two-, or three-dimensional manner. The curves in the vertical direction present different pixel values, e.g., in the case of a luminance signal, the values can be grey levels (a luminance signal generally comprises 0 - 255 grey levels), whereby the lower level of the curve can present a grey level, e.g., grey level 0, and the upper level of the curve can present grey level 255, for instance; the transition thus presents the edge of the image, in which a shift is made from a black field to a white field, for instance. Fig. 3a presents the over- and under-emphasized signal $S_{ee}$ provided by edge emphasis filter F3, and advanced A and delayed D signal, the over- and under-emphasized signal $S_{ee}$ provided by edge emphasis filter F3 being replaced, with respect to some image samples, as a combination of signals A and D, by a signal, which has been advanced A or delayed D in the median filter, whereby signal $S_M$, shown in Fig. 3b, is obtained as output $S_M$ of median filter F4, ad no disturbing ringing effect is generated in the output signal. Especially when processing colour components R, G, B and colour difference components U, V, the advantage thus obtained is considerable because no new colours are generated in the area of the sharpened transition.

The implementation and operation of the edge emphasis filter are well-known by those skilled in the art, therefore, they are not described here in detail.

The numbers (-1 0 3 0 -1) marked in Fig. 2a represent numbers which are used to multiply the inputs of the filter, i.e., in the Figure as viewed from the left, the first input is multiplied by number -1, the second one by number 3, and the third one by number -1. Signals obtained after the second and the fourth delay element are thus not used. Finally, all the multiplied inputs are added together, resulting in output $S_{ee}$ of the edge emphasis filter.

The implementation according to Fig. 2a can also be modified so that the delayed D and advanced A signal is taken from "farther" or "nearer" with respect to the mid point of the filter (i.e., with respect to pixel $S_{chck}$ which is monitored) by placing a higher number, or respectively, a smaller number of delay elements D in filter F2, or a greater number of samples can be taken to the edge emphasis filter from further away with respect to the monitored pixel, whereby edge emphasis filter F3 can be modified so that its factors are, for instance, -1 0 0 3 0 0 -1, or - 0.5 0 2 0 -0.5. This kind of modifying of filtering properties can also be made adjustable and/or adaptive in accordance with the measured noise level or the bandwidth of the signal, for instance. The signals used can also be motion or edge adaptive, whereby they are controlled using a motion detector and/or edge detector.

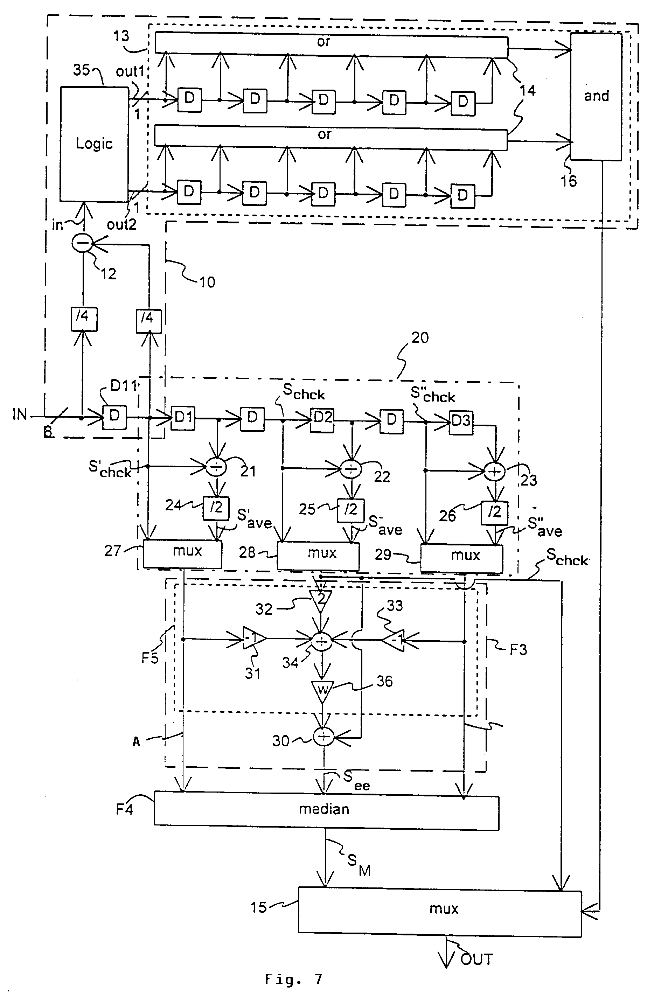

Fig. 2b presents a similar implementation of the filter according to the invention as in Fig. 2a, but the advanced and delayed signal is replaced with maximum and minimum filters F1, F2 which select for their output the highest, or respectively, the lowest of values d0-d6 inside the filter window. The interval between samples of the edge emphasis filter has also been increased and output $S_{ee}$ of the filter is defined by -d0+w*d3-d6 , i.e., its factors inside the entire window are (-1 0 0 w 0 0 -1), wherein w is a predetermined value or it is adjustable. The implementation of the filter, whose amplification is adjustable, is presented and considered in detail below in Fig. 7. The operation of the filter according to Fig. 2b and its input and output signals are presented in Figs. 3c and 3d. Minimum and maximum filters F1, F2 can also be replaced with other rank-order filters, such as those that choose the second highest and the second lowest value, whereby the arrangement becomes less sensitive to disturbance peaks, which can cause errors when maximum and minimum filters are used. The output signal OUT of the filter according to Fig. 2b is signal $S_M$, shown in Fig. 3d, which is selected from the output of minimum filter F1, from output $S_{ee}$ of the edge emphasis filter, and from the output of maximum filter F2 in different points of time, as can be seen in the figures when comparing Figures 3c and 3d.

The functional capability of the device- or filter structure shown in Fig. 2a can be further improved by adding to it a switching arrangement which checks if the signal inside the filter window is evenly ascending or descending. Such arrangement is presented in Fig. 5. If the signal inside the filter window contains divergent transitions, i.e., both ascending and descending transients, as shown in Fig. 4b, output OUT of the filter can be replaced with the original signal $S_{chck}$. This ensures that the filter does not function incorrectly in those points of the signal where fast changes occur. When using the solution according to Fig. 2b, there is no need to study the structure of the transient because the solution according to Fig. 2b is also capable of processing correctly signals containing divergent transients, as shown in Figs. 3c and 3d. This is due to the replacement of the advanced and delayed signal by rank-order filters F1, F2.

The structure of the signal can be examined, e.g., by using an algorithm which subtracts the sequential pixels inside the filter window from each other and checks if the result of these subtractions has the same sign (positive P or negative N) in the area of the filter window. The result is marked stepwise in the lower edge of the signal in Figs. 4a and 4b, the result being obtained when the value of a previous pixel is subtracted from a pixel, whereby the result in an ascending transient is positive P and in a descending transient negative N, and on a even portion 0. If a result of a different sign is perceived (0 accounts for the same sign), a signal is given to the enhancement filter of transients (for instance, the filter structure according to Fig. 2a): this signal selects the original pixel to the output of the filter. In Fig. 5, a similar filter structure is used for the sharpening of the transient as in Fig. 2a but a switching arrangement has been added to the structure in Fig. 5, which examines the structure of the transient and, on the basis of it, chooses either processed signal $S_M$, i.e., the signal containing a sharpened transient, or original signal $S_{chck}$ for the output of the filter. Examination block 10 of transients thus comprises delay element D11 and calculating block 12 of differences; and two sequential samples which are subtracted from each other are brought to block 12. The result of the subtraction is taken from calculating block 12 of differences to block 13 that checks the sign of the difference and comprises a number of sequentially connected delay elements D, and logic block 14, such as an OR-port to which the differences calculated from several sequential samples are brought, whereby it can be seen whether the differences have different signs or same signs, i.e., whether the transients are divergent or parallel. The logic block operates so that if the differences are of the same sign (i.e., only zeroes or positive, or alternatively, only zeroes or negative), control signal $S_{CTRL}$ is given as the output, causing selection block 15, such as a multiplexer, to give processed signal $S_M$ to the output OUT of the filter, and if even one difference is of a different sign than the other differences, control signal $S_{CTRL}$ is given as the output, transmitting the original signal $S_{chck}$ to the output of the filter.

The lengths of the delays can also be adjusted according to the signal structure, that is to say, the filter window can be shortened if there are divergent transients in the area, in order to get only parallel transients in the filter window. The block examining the signal structure can also be used to adjust the weighting coefficients of the last filtering stage (such as WOS). For instance, the last filtering stage can be a weighted median filter, the average weight of which is altered using a control signal so that output $S_{ee}$ of edge emphasis filter F3 is selected as output $S_M$ of the median filter every time there are divergent transients in the signal.

Generally, a lower sampling rate is used in the digital processing of colour difference components (UV) than in the processing of luminance components (Y). Consequently, in the processing of YUV components, 422 or 411 sampling is referred to wherein the numbers refer to the sampling ratio of luminance and chrominance components. However, in the final stage of the digital processing, the sampling rate of the U and V components is normally raised to the same level as in the processing of luminance components. In known prior art techniques, however, the highest output frequencies accomplished in the processing of colour difference components are lower than a half of the sampling rate of the original signal (the Nyquist frequency), whereby the transients of the signal are relatively gently sloping.

The enhancement method of transients according to the invention can be added to altering methods of sampling rates (interpolation), whereby the maximum output frequency can be increased to the same level for chrominance components as for the luminance. The method according to the invention can also be combined with other linear and nonlinear interpolation methods used in image processing. The increase of image size in the vertical and/or horizontal direction, or changes in the line frequency can be mentioned as exemplary applications. Figs. 6a - 6c illustrate the effect of the increase of sampling rate and the sharpening of the transient on the signal. Fig. 6a shows the original signal in the form of sampled data and Fig. 6b shows the same signal after increasing the sampling rate, and Fig. 6c shows the signal according to Fig. 6b after sharpening the transient. As shown in Figs. 6a - 6c, the invention is especially intended for processing signals in the form of sampled data. Consequently, samples are taken of a signal continuously on, the samples corresponding to the points, i.e., pixels of the image.

Fig. 7 shows an implementation in which, in addition to structure checking block 10 of the transient, block 20 increasing the sampling rate of signals has been added to the filter structure sharpening the transients ad implemented according to the invention, block 20 comprising a linear interpolator, for instance. Two outputs are calculated for each input $S_{chck}$; one of the outputs is calculated using original signal samples $S'_{chck}$, $S_{chck}$ and $S''_{chck}$, and the other one by using average signal values $S'_{ave}$, $S_{ave}$ and $S''_{ave}$. Interpolator 20 thus comprises delay elements D for forming both the delayed and advanced signals and the sample to be examined, and delay elements D1, D2, and D3 for delaying each of the samples $S'_{chck}$, $S_{chck}$, and $S''_{chck}$ in order to form the average signal value of samples $S'_{chck}$, $S_{chck}$, and $S''_{chck}$ and of the delayed signal. When forming the average value, sample $S'_{chck}$, $S_{chck}$, and $S''_{chck}$ and the delayed signal are summed in summing unit 21, 22, 23 and divided by two dividers 24, 25, 26. Original sample $S'_{chck}$, $S_{chck}$, $S''_{chck}$ and the signal average $S'_{ave}$, $S_{ave}$, and $S''_{ave}$ are taken as inputs to multiplexer 27, 28, 29, from where they are taken out on double frequency.

Interpolator 20 is combined with the enhancement method of transients the structure of which is the same as in the previous examples. In the solution according to Fig. 7, edge emphasis filter F3 consists of highpass filter F5 and summing unit 30 which sums the output signal of the highpass filter and the original signal $S_{chck}$ which is examined, for forming edge-emphasized signal $S_{ee}$. In this solution the factors of the edge emphasis filter are presented by multipliers 31, 32, 33 in which the advanced A, the delayed D signal and signal $S_{chck}$, which is examined, are multiplied and, finally, summed in summing unit 34. The difference of this solution to the edge emphasis filters shown in Figs. 2a, 2b and 5 is that the power of the edge emphasis filter can be adjusted here using parameter w. This adjustment can be carried out using multiplier 36 placed after summing unit 34, in which the signal can be multiplied with desired factor w. Edges R of output signal $S_{ee}$ of the edge emphasis filter remain in place in the horizontal direction, but the position of edges R can be changed in the vertical direction, depending on factor w. Therefore, if factor w is increased, upper edge R rises, and lower edge R is lowered, respectively, whereby the transient part of the transition becomes sharper.

The filter according to Fig. 7 is also controllable according to the signal structure, i.e., it comprises examining block 10 of transients, as in the filter shown in Fig. 5. The difference is formed of sequential samples in subtraction block 12, from where the differences are taken to examining block 35 of differences of checking block 13 of differences. Before taking a difference from sequential samples, they are divided by four, i.e., the two lowest bits are dropped off. This is done in order to eliminate the effect of small changes caused by noise on the operation of the examination block. Examining block 35 of differences examines the incoming difference to see whether it is negative, positive, or zero, and its truth table on the basis of the input is the following:

| in | out1 | out2 |
|---|---|---|
| zero | 0 | 0 |
| positive | 1 | 0 |
| negative | 0 | 1 |

Outputs out1 and out2 are taken to the delay chain of the checking block of differences, from where the results of a number of checked differences are taken to logic block 14, such as an OR-port. Logic block 14 operates so that if the differences are of the same sign (i.e., only zeroes or positive, or alternatively only negative), the one logic block 14 provides logic '0' as the one input of And-port 16, and the other logic block 14 provides logic '1' as the other input of port 16, whereby logic '0' is the logic output of AND-port 16, and selection block 15, such as a multiplexer, is caused to give processed signal $S_M$ to output OUT of the filter. If even one difference is of a different sign than the other differences, both inputs of AND-port 16 are logics '1', whereby the logic output of AND-port 16 is logic '1', and selection block 15 is caused to give original signal $S_{chck}$ to output OUT of the filter.

The interpolation filters in Fig. 7 are comprised of average value filters, as previously described. More complex filters than average value filters can also be used as interpolation filters. The filter structure (the interpolator) can also be altered so that it increases the sampling rate to more than double the rate. In this case a sufficient number of new samples are calculated per each incoming sample, using different interpolation filters, and each sample is sharpened in a corresponding manner as in the example. A filter structure increasing the sampling rate can also be used in the vertical and horizontal directions to increase the image size without softening the edges.

The method and filter structure according to the invention makes it possible to sharpen the transients of video signals for each component (YUV or RGB) individually, and it is suitable for sharpening both the luminance component and the colour components. In addition, some embodiments of the invention enable the checking of the transient structure, whereby the errors generated in the signal processing are prevented from entering the output of the filter structure.

**Claims**

1. A method for enhancing the sharpness of the transient of a video signal in the form of a component, **characterized in that** the video signal is filtered in at least two different filtering stages (S1 - Sn, Sv; F1, F2, F3, F4); the filtering stage in the beginning (S1 - Sn; F1, F2, F3) processing the frequency, phase or structure of the videosignal or a combination thereof, providing different processed signals (A, $S_{ee}$, D) as outputs, and in the last filtering stage (Sv; F4) an output signal (OUT) is selected from at least two signals (A, $S_{ee}$, D) of said last filtering stage (Sv; F4), obtained as inputs and processed in any of the previous filtering stages, whereby the last filtering stage (Sv; F4) is a WOS filter thus avoiding unwanted under- and overshoot.

**2.** A method according to Claim 1, **characterized** in that luminance signal Y is processed by it.

**3.** A method according to Claim 1, **characterized in that** chrominance signal U or V is processed by it.

**4.** A method according to Claim 1, **characterized** in that colour components RGB are processed by it.

**5.** A method according to Claim 1, **characterized** in that the videosignal is processed by a linear filter in the initial filtering stage.

**6.** A method according to Claim 1, **characterized** in that the videosignal is processed by a nonlinear filter in the initial filtering stage.

**7.** A method according to any of the preceding Claims, **characterized** in that the samples of the videosignal are selected from the video image in a one-, two-, or thee-dimensional manner in the horizontal, vertical and time level of the video image.

**8.** A method according to Claim 7, **characterized** in that the output signal (OUT) is selected using the WOS-filter (F4), to which are brought, as inputs, a signal which is advanced (A) and delayed (D) with respect to the signal being examined, and the output signal ($S_{ee}$) of the edge emphasis filter (F3) performing the sharpening of the transient, and each image sample of the output signal (OUT) is respectively selected from said signals (A, D, $S_{ee}$).

**9.** A method according to any of the preceding Claims, **characterized** in that the structure of the transient is checked for determining, whether the respectively filtered signal comprises parallel transients or divergent transients, and if the result of the checking is that the filter window only comprises parallel transients, a processed signal is selected as the output signal, but if it is stated that the filter window comprises divergent transients, the original signal is selected as the output signal.

**10.** A method according to Claim 7, **characterized** in that the output signal (OUT) is selected using the WOS-filter (F4), to which are brought, as inputs, the minimum ($S_{Min}$) and the maximum ($S_{Max}$) value of the signals which are advanced and delayed with respect to the signal being examined, as well as the output signal ($S_{ee}$) of the edge emphasis filter (F3) performing the sharpening of the transient, and each image sample of the output signal (OUT) is respectively selected from said signals (A, D, $S_{ee}$).

**11.** A method according to any of the preceding Claims, **characterized** in that the signal is processed in the form of sampled data and its sampling rate is increased before filtering the signal.

**12.** A device for altering the sharpness of the transient of a video signal in the form of a component, **characterized** in that it comprises at least two different filtering stages (S1 - Sn, Sv; F1, F2, F3, F4), of which at least one of the initial filtering stages (S1 - Sn; F1, F2, F3) comprises a filter (S1 - Sn; F1, F2, F3) for processing the frequency, phase or structure of the video signal or a combination thereof, providing as outputs different processed signals (A, D, $S_{ee}$), and the last filtering stage (Sv; F4) comprises a WOS filter (Sv; F4) for selecting the output signal (OUT) of the device from at least two signals (A, $S_{ee}$, D) of the filtering stage (Sv; F4), obtained as inputs and processed in any of the previous filtering stages.

**13.** A device according to Claim 12, **characterized** in that the initial filtering stage comprises a linear filter.

**14.** A device according to Claim 12, **characterized** in that the initial filtering stage comprises a nonlinear filter.

**15.** A device according to Claim 12, **characterized** in that the initial filtering stage comprises an edge emphasis filter (F3).

**16.** A device according to Claim 15, **characterized** in that the last filtering stage (Sv; F4) comprises, as inputs, a signal which is advanced (A) and delayed (D) with respect to the signal ($S_{chck}$) being examined and the output signal ($S_{ee}$) of the edge emphasis filter.

**17.** A device according to Claim 12, **characterized** in that it comprises a checking block (10) of the video signal transient structure, defining in which directions the transients of the signal brought to the device are, and a selective block (15) to which is connected the output ($S_M$) of the last filtering stage and the original signal ($S_{chck}$), for connecting the input of either one of them to its output, and the output ($S_{CTRL}$) of the checking block of the transient structure is connected as the control input of the selective block.

**18.** A device according to Claim 15, **characterized** in that it comprises several delay elements (D) sequentially connected, and a minimum (F1) and a maximum filter, to the inputs of which is connected the output (F2) of each delay element (D) for providing a minimum ($S_{Min}$) and, correspondingly, a maximum value of the signals received as its inputs, and the inputs of the last filtering stage (Sv; F4) are the miminum ($S_{Min}$) and the maximum ($S_{Max}$) value of the signals which are advanced and delayed with respect to the signal ($S_{chck}$) being examined, as well as the output signal ($S_{ee}$) of the edge emphasis filter.

19. A device according to Claim 12, **characterized** in that it comprises an increase block (20) of sampling rates placed before the first filtering stage to increase the sampling rate of the samples which are brought to the filtering stages.

20. A device according to Claim 17, **characterized** in that block (10) of the structure of the transient of a video signal comprises a forming block (12) of differences to calculate the difference between two pixels processed sequentially, and a checking block (13) of the sign of differences to check the signs of differences calculated from a number of pixels processed in sequence.

21. A device according to Claim 20, **characterized** in that the checking block (13) of the sign of differences comprises a chain of delay elements (D) and a logic block (14) for comparing the sequential differences provided by a number of delay elements (D) sequentially arranged in order to define the direction of the transient.

**Patentansprüche**

1. Verfahren für die Anhebung der Schärfe der Übergänge eines Videosignals in Komponentenform, dadurch gekennzeichnet, daß das Videosignal in wenigstens zwei verschiedenen Filterstufen (S1 - Sn, Sv; F1, F2, F3, F4) gefiltert wird, wobei die ersten Filterstufen (S1 - Sn; F1, F2, F3) die Frequenz, Phase oder Struktur des Videosignals oder eine Kombination davon verarbeiten und als Ausgangssignale verschiedene verarbeitete Signale (A, $S_{ee}$, D) zur Verfügung stellen und in der letzten Filterstufe (Sv; F4) ein Ausgangssignal (OUT) aus wenigstens zwei Signalen (A, $S_{ee}$, D), die der erwähnten letzten Filterstufe (Sv; F4) als Eingangssignale zugeführt und in den vorhergehenden Filterstufen verarbeitet wurden, ausgewählt wird, wobei die letzte Filterstufe (Sv; F4) ein WOS- Filter ist und damit unerwünschtes Unter- oder Überschwingen vermieden wird.

2. Verfahren entsprechend Anspruch 1, dadurch gekennzeichnet, daß damit ein Luminanz- Signal Y verarbeitet wird.

3. Verfahren entsprechend Anspruch 1, dadurch gekennzeichnet, daß damit ein Chrominanzsignal U oder V verarbeitet wird.

4. Verfahren entsprechend Anspruch 1, dadurch gekennzeichnet, daß damit Farbkomponentensignale RGB verarbeitet werden.

5. Verfahren entsprechend Anspruch 1, dadurch gekennzeichnet, daß das Videosignal in der ersten Filterstufe mittels eines linearen Filters verarbeitet wird.

6. Verfahren entsprechend Anspruch 1,dadurch gekennzeichnet, daß das Videosignal in der ersten Filterstufe mittels eines nichtlinearen Filters verarbeitet wird.

7. Verfahren entsprechend einem der vorstehenden Ansprüche, dadurch gekennzeichnet, daß die Abtastwerte des Videosignals aus dem Videobild auf ein-, zwei-, oder dreidimensionale Weise aus der horizontalen, vertikalen und Zeitebene des Videobildes ausgewählt werden.

8. Verfahren entsprechend Anspruch 7, dadurch gekennzeichnet, daß das Ausgangssignal (OUT) mittels des WOS- Filters (F4), dem als Eingangssignale in Bezug auf das untersuchte Signal voreilende (A) und verzögerte (D) Signale und das Ausgangssignal ($S_{ee}$) des Kantenhervorhebungsfilters (F3), das die Schärfeanhebung des Übergangs bewirkt, ausgewählt wird und daß jeder Bildabtastwert des Ausgangssignals (OUT) entsprechend aus den erwähnten Signalen(A, D, $S_{ee}$) ausgewählt wird.

9. Verfahren entsprechend einem der vorstehenden Ansprüche, dadurch gekennzeichnet, daß die Struktur der Übergänge daraufhin überprüft wird, ob die entsprechenden gefilterten Signale parallele oder auseinanderstrebende Übergänge enthalten und wenn diese Überprüfung ergeben hat, daß das Filterfenster nur parallele Übergänge enthält, als Ausgangssignal ein verarbeitetes Signal ausgewählt wird, aber wenn festgestellt wird, daß das Filterfenster auseinanderstrebende Übergänge aufweist, das Originalsignal als Ausgangssignal ausgewählt wird.

10. Verfahren entsprechend Anspruch 7, dadurch gekennzeichnet, daß das Ausgangssignal (OUT) mittels des WOS- Filters (F4), dem als Eingangssignale die Minimum-($S_{min}$) und die Maximum-($S_{max}$) Werte der in Bezug auf das untersuchte Signal voreilenden und verzögerten Signale wie auch das Ausgangssignal ($S_{ee}$) des Kantenhervorhebungsfilters (F3), das die Schärfeanhebung des Übergangs bewirkt, ausgewählt wird und daß jeder Bildabtastwert des Ausgangssignals (OUT) entsprechend aus den erwähnten Signalen(A, D, $S_{ee}$) ausgewählt wird.

11. Verfahren entsprechend einem der vorstehenden Ansprüche, gekennzeichnet dadurch, daß das Signal in der Form von Abtastwerten verarbeitet wird und daß die Abtastrate vor der Filterung des Signals erhöht wird.

**12.** Vorrichtung zur Veränderung der Schärfe von Übergängen eines Videosignals in Komponentenform, dadurch gekennzeichnet, daß sie wenigstens zwei verschiedene Filterstufen (S1 - Sn, Sv; F1, F2, F3, F4) umfaßt, wobei wenigstens eine der ersten Filterstufen (S1 - Sn, F1, F2, F3,) ein Filter (S1 - Sn, F1, F2, F3,) für die Verarbeitung der Frequenz, der Phase oder der Struktur des Videosignals oder einer Kombination davon enthält und als Ausgangssignale verschiedene verarbeitete Signale (A, D, $S_{ee}$) zur Verfügung stellt und die letzte Filterstufe (Sv; F4) ein WOS Filter (Sv; F4) enthält für das Auswählen des Ausgangssignals (OUT) der Vorrichtung aus wenigstens zwei Signalen (A, $S_{ee}$, D) der Filterstufe als Eingangssignale und die in einer der vorhergehenden Filterstufen verarbeitet wurden.

**13.** Vorrichtung entsprechend Anspruch 12, dadurch gekennzeichnet, daß die erste Filterstufe ein lineares Filter umfaßt.

**14.** Vorrichtung entsprechend Anspruch 12, dadurch gekennzeichnet, daß die erste Filterstufe ein nichtlineares Filter umfaßt.

**15.** Vorrichtung entsprechend Anspruch 12, dadurch gekennzeichnet, daß die erste Filterstufe ein Kantenhervorhebungsfilter (F3) umfaßt.

**16.** Vorrichtung entsprechend Anspruch 15, dadurch gekennzeichnet, daß die letzte Filterstufe (Sv; F4) als Eingangssignale ein in Bezug auf das untersuchte Signal ($S_{chck}$) voreilendendes Signal (A) und ein in Bezug auf das untersuchte Signal ($S_{chck}$) verzögertes Signal(D) und das Ausgangssignal ($S_{ee}$) des Kantenhervorhebungsfilters erhält.

**17.** Vorrichtung entsprechend Anspruch 12, dadurch gekennzeichnet, daß sie eine Prüfeinrichtung (10) für die Videosignalübergangsstruktur aufweist, die feststellt, in welche Richtungen die Übergänge des Signals, das an der Vorrichtung anliegt, gehen und eine Auswahleinrichtung (15), an die der Ausgang ($S_M$) der letzten Filterstufe und das Originalsignal ($S_{chck}$) angeschlossen sind, um einen dieser Eingänge mit dem Ausgang zu verbinden, wobei der Ausgang ($S_{CTRL}$) der Prüfeinrichtung als Steuereingang der Auswahleinrichtung angeschlossen ist.

**18.** Vorrichtung entsprechend Anspruch 15, dadurch gekennzeichnet, daß es verschiedene Verzögerungselemente (D) umfaßt, die seriell angeschlossen sind und ein Minimum-(F1) und ein Maximum-Filter, an deren Eingänge der Ausgang (F2) jedes Verzögerungselements (D) angeschlossen ist, um einen Minimum- ($S_{Min}$) und entsprechend einen Maximalwert der Signale, die als Eingangssignale empfangen werden, zur Verfügung zu stellen und als Eingangssignale der letzten Filterstufe (Sv;F4) sowohl die Minimum- ($S_{Min}$) und die Maximum- ($S_{Max}$) Werte der im Bezug zum untersuchten Signal ($S_{chck}$) voreilenden und verzögerten Signale als auch das Ausgangssignal ($S_{ee}$) des Kantenhervorhebungsfilters empfängt.

**19.** Vorrichtung entsprechend Anspruch 12, dadurch gekennzeichnet, daß es eine Erhöhungseinrichtung (20) für die Abtastrate aufweist, angeordnet vor der ersten Filterstufe, um die Abtastrate der Abtastwerte, die den Filterstufen zugeführt werden, zu erhöhen.

**20.** Vorrichtung entsprechend Anspruch 17, dadurch gekennzeichnet, daß die Prüfeinrichtung (10) für die Struktur der Videosignalübergänge eine Differenz-Recheneinrichtung (12) umfaßt für das Berechnen der Differenz zwischen zwei nacheinander bearbeiteten Bildelementen und eine Vorzeichenprüfeinrichtung (13) zur Ermittlung der Vorzeichen der Differenzen, die zwischen einer Anzahl von Bildelementen nacheinander berechnet wurden.

**21.** Vorrichtung entsprechend Anspruch 20, dadurch gekennzeichnet, daß die Vorzeichenprüfeinrichtung (13) eine Kette von Verzögerungselementen (D) umfaßt und eine Logikeinrichtung (14) zum Vergleichen der nacheinander ermittelten Differenzen, die von der Anzahl der nacheinander angeordneten Verzögerungselemente (D) zur Verfügung gestellt werden, um die Richtung des Übergangs festzustellen.

**Revendications**

**1.** Procédé pour améliorer la netteté de la transitoire d'un signal vidéo sous la forme d'une composante, caractérisé en ce que le signal vidéo est filtré dans au moins deux étages de filtrage différents (S1 - Sn, Sv ; F1, F2, F3, F4), l'étage de filtrage de début (S1 - Sn ; F1, F2, F3) traitant la fréquence, la phase ou la structure du signal vidéo ou une combinaison de celles-ci, délivrant différents signaux traités (A, $S_{ee}$, D) en tant que signaux de sortie, et dans l'étage de filtrage de fin (Sv ; F4) un signal de sortie (OUT) est sélectionné à partir d'au moins deux signaux (A, $S_{ee}$, D) dudit étage de filtrage de fin (Sv ; F4) obtenus en tant que signaux d'entrée et traités dans l'un quelconque des étages de filtrage précédents, dans lequel l'étage de filtrage de fin (Sv ; F4) est un filtre WOS, permettant d'éviter ainsi une sous-oscillation et une suroscillation indésirables.

2. Procédé selon la revendication 1, caractérisé en ce que le signal de luminance Y est traité par lui.

3. Procédé selon la revendication 1, caractérisé en ce que le signal de chrominance U ou V est traité par lui.

4. Procédé selon la revendication 1, caractérisé en ce que les composantes de couleurs RGB sont traitées par lui.

5. Procédé selon la revendication 1, caractérisé en ce que le signal vidéo est traité par un filtre linéaire dans l'étage de filtrage initial.

6. Procédé selon la revendication 1, caractérisé en ce que le signal vidéo est traité par un filtre non linéaire dans l'étage de filtrage initial.

7. Procédé selon l'une quelconque des revendications précédentes, caractérisé en ce que les échantillons du signal vidéo sont sélectionnés à partir de l'image vidéo d'une manière uni-, bi- ou tridimensionnelle du niveau horizontal, vertical et temporel de l'image vidéo.

8. Procédé selon la revendication 7, caractérisé en ce que le signal de sortie (OUT) est sélectionné en utilisant le filtre WOS (F4), auquel sont appliqués, en tant que signaux d'entrée, un signal qui est avancé (A) et retardé (D) par rapport au signal faisant l'objet d'un examen, et le signal de sortie ($S_{ee}$) du filtre d'accentuation des bords (F3) accomplissant le relèvement de la netteté de la transitoire, chaque échantillon d'image du signal de sortie (OUT) étant respectivement sélectionné à partir desdits signaux (A, $S_{ee}$, D).

9. Procédé selon l'une quelconque des revendications précédentes, caractérisé en ce que la structure de la transitoire est contrôlée de manière à déterminer si le signal respectivement filtré comprend des transitoires parallèles ou des transitoires divergentes et si le résultat du contrôle est que la fenêtre de filtre ne comprend que des transitoires parallèles, un signal traité est sélectionné en tant que signal de sortie, mais s'il est établi que la fenêtre de filtre comprend des transitoires divergentes, le signal original est sélectionné en tant que signal de sortie.

10. Procédé selon la revendication 7, caractérisé en ce que le signal de sortie (OUT) est sélectionné en utilisant le filtre WOS (F4), auquel sont appliquées, en tant que signaux d'entrée,' la valeur minimale ($S_{Min}$) et la valeur maximale ($S_{Max}$) des signaux qui sont avancés et retardés par rapport au signal faisant l'objet d'un examen, ainsi que le signal de sortie ($S_{ee}$) du filtre d'accentuation des bords (F3) accomplissant le relèvement de la netteté de la transitoire, chaque échantillon d'image du signal de sortie (OUT) étant respectivement sélectionné à partir desdits signaux (A, $S_{ee}$, D).

11. Procédé selon l'une quelconque des revendications précédentes, caractérisé en ce que le signal est traité sous la forme de données échantillonnées et sa fréquence d'échantillonnage est accrue avant le filtrage du signal.

12. Dispositif pour améliorer la netteté de la transitoire d'un signal vidéo sous la forme d'une composante, caractérisé en ce qu'il comprend au moins deux étages de filtrage différents (S1 - Sn, Sv ; F1, F2, F3, F4), dont au moins un des étages de filtrage initiaux (S1 - Sn ; F1, F2, F3) comprend un filtre (S1 - Sn ; F1, F2, F3) pour traiter la fréquence, la phase ou la structure du signal vidéo ou une combinaison de celles-ci, délivrant différents signaux traités (A, $S_{ee}$, D) en tant que signaux de sortie, et l'étage de filtrage de fin (Sv ; F4) comprend un filtre WOS (Sv ; F4) pour sélectionner le signal de sortie (OUT) du dispositif à partir d'au moins deux signaux (A, $S_{ee}$, D) de l'étage de filtrage (Sv ; F4) obtenus en tant que signaux d'entrée et traités dans l'un quelconque des étages de filtrage précédents.

13. Dispositif selon la revendication 12, caractérisé en ce que l'étage de filtrage initial comprend un filtre linéaire.

14. Dispositif selon la revendication 12, caractérisé en ce que l'étage de filtrage initial comprend un filtre non linéaire.

15. Dispositif selon la revendication 12, caractérisé en ce que l'étage de filtrage initial comprend un filtre d'accentuation des bords (F3).

16. Dispositif selon la revendication 15, caractérisé en ce que l'étage de filtrage de fin (Sv ; F4) comprend, en tant que signaux d'entrée, un signal qui est avancé (A) et retardé (D) par rapport au signal ($S_{chck}$) faisant l'objet d'un examen, et le signal de sortie ($S_{ee}$) du filtre d'accentuation des bords.

17. Dispositif selon la revendication 12, caractérisé en ce qu'il comprend un bloc de contrôle (10) de la structure des transitoires du signal vidéo, définissant dans quelles directions se trouvent les transitoires du signal appliqué au dispositif, et un bloc sélectif (15) auquel sont connectés le signal de sortie ($S_M$) de l'étage de filtrage de fin et le signal original ($S_{chck}$), de manière à connecter l'entrée de l'un ou l'autre de ces derniers à sa sortie, le signal de sortie ($S_{CTRL}$) du bloc de contrôle de la structure des transitoires étant connecté en tant que signal d'entrée de commande du bloc sélectif.

18. Dispositif selon la revendication 15, caractérisé en ce qu'il comprend plusieurs éléments à retard (D) séquentiellement connectés, et un filtre à valeur minimale (F1) et à valeur maximale, aux entrées duquel est connecté le signal de sortie (F2) de chaque élément à retard (D) afin de délivrer une valeur minimale ($S_{Min}$) et, de façon correspondante, une valeur maximale des signaux reçus en tant que ses signaux d'entrée, et les signaux d'entrée de l'étage de filtrage de fin (Sv ; F4) sont la valeur minimale ($S_{Min}$) et la valeur maximale ($S_{Max}$) des signaux qui sont avancés et retardés par rapport au signal ($S_{chck}$) faisant l'objet d'un examen, ainsi que le signal de sortie ($S_{ee}$) du filtre d'accentuation des bords.

19. Dispositif selon la revendication 12, caractérisé en ce qu'il comprend un bloc d'accroissement (20) des fréquences d'échantillonnage placé avant le premier étage de filtrage de manière à accroître la fréquence d'échantillonnage des échantillons qui sont appliqués aux étages de filtrage.

20. Dispositif selon la revendication 17, caractérisé en ce que le bloc (10) de la structure de la transitoire d'un signal vidéo comprend un bloc d'établissement (12) de différences de manière à calculer la différence entre deux pixels traités séquentiellement, et un bloc de contrôle (13) du signe des différences de manière à contrôler les signes des différences calculées à partir d'un certain nombre de pixels traités au cours d'une séquence.

21. Dispositif selon la revendication 20, caractérisé en ce que le bloc de contrôle (13) du signe des différences comprend une chaîne d'éléments à retard (D) et un bloc logique (14) pour comparer les différences séquentielles fournies par un certain nombre d'éléments à retard (D) séquentiellement agencés de manière à définir la direction de la transitoire.

Fig. 1

Fig. 2a

Fig. 2b

Fig. 3a

Fig. 3b

Fig. 3c

Fig. 3d

The difference calculated from two
sequential signal samples

Fig. 4

Fig. 5

Original signal

Fig. 6a

Signal after
interpolation
filtering

Fig. 6b

Signal after
sharpening of
transient

Fig. 6c

Fig. 7